# EUROPÄISCHE PATENTSCHRIFT

(11) **EP 2 536 968 B1**
(45) Veröffentlichungstag und Bekanntmachung des Hinweises auf die Patenterteilung: **14.05.2014**
(21) Anmeldenummer: 11726042.2
(22) Anmeldetag: 11.02.2011
(51) Int. Cl.: F16K 31/04

(54) **STELLANTRIEB FÜR SICHERHEITSVENTILE MIT HOHEM STELLMOMENT**
ACTUATING DRIVE FOR SAFETY VALVES HAVING A HIGH ACTUATING TORQUE
MÉCANISME DE COMMANDE POUR SOUPAPES DE SÛRETÉ À COUPLE DE COMMANDE ÉLEVÉ

(30) Priorität: 15.02.2010 DE 102010008092
(43) Veröffentlichungstag der Anmeldung: 26.12.2012
(73) Patentinhaber: Führer Engineering KG, 39288 Burg (DE); PRÄMAB Präzisionsmaschinen- und Anlagenbau GmbH, 39288 Burg (DE)
(72) Erfinder: FÜHRER, Michael, 39175 Biederitz (DE)
(74) Vertreter: Herzog, Günter
(86) Internationale Anmeldenummer: PCT/DE2011/000129
(87) Internationale Veröffentlichungsnummer: WO 2011/098075

(56) Entgegenhaltungen:
- US-A- 3 921 264
- US-A- 6 015 142

## Beschreibung

### Stand der Technik

Die Erfindung geht aus von einem Stellantrieb für Sicherheitsventile mit hohem Stellmoment nach dem Oberbegriff des Hauptanspruchs.

Sicherheitsventile, sog. Ventile mit SAV-Funktion, werden beispielsweise zum automatischen Verschließen von brennbare oder andere gefährliche Medien führenden Leitungen eingesetzt. Bei Störungen oder in Havariefällen, bei denen die Stellantriebe infolge der Unterbrechung der Energieversorgung ausfallen, verschließen diese Ventile die Leitung automatisch. Das wird dadurch erreicht, dass während des betriebsmäßigen Öffnens des Ventils gleichzeitig ein mechanischer Energiespeicher, in der Regel eine Feder, vorgespannt wird, deren Federkraft auf das Ventilglied wirkt. Im Betriebszustand wird das Ventilglied durch das Stellglied gegen die Kraft der Feder in geöffneter Stellung gehalten. Aufgrund der zum Betätigen der Ventile erforderlichen hohen Drehmomente werden hydraulische und pneumatische Stellantriebe verwendet, die jedoch mit einer Reihe von Nachteilen behaftet sind. Zunächst ist hier der hohe Herstellungs- und Wartungsaufwand zu nennen, den sowohl Hydraulikaggregate als auch Pneumatikstationen einschließlich ihrer Speichersysteme erfordern. Pneumatisch doppelt wirkende Energiespeicher benötigen z. B. ein Windkessel-Mindestdruck-Überwachungssystem. Zum andern besteht die Gefahr des Einfrierens der Medien, insbesondere der Luft, die aus diesem Grund weitgehend getrocknet sein muss. Darüber hinaus gehört Pneumatik zu einer der teuersten Energieformen. Nicht zuletzt spielen umwelttechnische Belange eine wesentliche Rolle. Bei den Anlagen und Leitungssystemen muss Undichtheit nicht nur zur Gewährleistung der Funktionssicherheit unbedingt vermieden werden, sondern auch, um eine Kontamination des Bodens mit Öl zu verhindern. Bei pneumatischen Anlagen ist im Auslösefall der Austritt von geölter Druckluft unvermeidbar.

Aus diesen Gründen hat man bereits elektrische Stellantriebe mit mechanischen Energiespeichern für Sicherheitsventile entwickelt, bei denen auch bei Ausfall der Versorgungsspannung ein sicherer Antrieb des Stellgliedes bis zum Schließen des Ventils gegeben ist. Im Normalbetrieb treibt ein von einem Elektromotor angetriebener Stellantrieb über ein Stirnradgetriebe das Stellglied an und lädt dabei gleichzeitig den mechanischen Energiespeicher auf. Als mechanischer Energiespeicher dienen geschichtete Tellerfedern, die von einer verkehrt wirkenden Haltebremse in gespannter Position gehalten werden. Diese Haltebremse dient im Havariefall als Auslöser, wobei dann der Energiespeicher das Stellglied über ein 3-gängiges Schneckenradgetriebe und eine Kugeltriebspindel antreibt (siehe Prospektblatt der Fa. SCHIEBEL, Wien).

Der Nachteil dieses Stellantriebs besteht darin, dass er nur für Ventile mit verhältnismäßig kleinen Nennweiten geeignet ist, bei denen das Antriebsmoment 2.000 Nm nicht überschreitet. Ventile mit Nennweiten von 300 mm erfordern jedoch Antriebsmomente von bis zu 5.500 Nm. Hierfür sind derzeit keine praktikablen technischen Lösungen bekannt.

Das Dokument US 6 015 142 A beschreibt einen Stellantrieb gemäß dem Oberbegriff von Anspruch 1.

### Die Erfindung und ihre Vorteile

Der erfindungsgemäße Antrieb für Sicherheitsventile mit den kennzeichnenden Merkmalen des Hauptanspruchs hat demgegenüber den Vorteil, dass er ein ausreichend hohes Antriebsmoment aufbringt, so dass auch Ventile mit Nennweiten oberhalb 200 mm bei Energieausfall sicher geschlossen werden können. Vorteilhaft ist ferner, dass mit der erfindungsgemäßen Kombination von einem Planetengetriebe mit dem mechanischen Energiespeicher wesentlich kürzere Schließzeiten erzielt werden, was für die Sicherheit des Gesamtsystems von außerordentlicher Bedeutung ist. Das wird erfindungsgemäß dadurch erreicht, dass das erforderliche Schließmoment von einer bestimmten Anzahl von Schenkelfedern aufgebracht wird, die achsparallel um die Antriebswelle angeordnet und mit den Planetenrädern des Planetengetriebes drehfest verbunden sind. Dadurch wird das erforderliche Schließmoment auf eine Vielzahl einzelner mechanischer Energiespeicher aufgeteilt, wobei diese Aufteilung über die Planetenräder technisch umgesetzt wird. Vorteilhaft ist auch, dass die Energiespeicherung durch die Verdrehung der Schenkelfedern und nicht durch die Längenänderung einer Druckfeder erfolgt. Der Stellantrieb kann dadurch insgesamt in einer wesentlich kleineren Bauweise ausgeführt werden als das bei den herkömmlichen, beispielsweise mit lediglich einer Druckfeder ausgerüsteten Stellantrieben der Fall ist. Auch der gegenüber dem im Stand der Technik genannten elektrisch angetriebenen mechanischen Energiespeicher deutlich größere Wirkungsgrad trägt mit zur Erhöhung des Antriebsmoments bei gleichzeitig handhabbarer Baugröße des Antriebs bei.

Nach einer vorteilhaften Ausgestaltung der Erfindung ist der Abtrieb des Motors über mindestens eine Getriebestufe mit dem Planetengetriebe verbunden. Dadurch können das Stellmoment und die Umdrehung der Planetenräder sehr genau auf die Bedingungen des am Sicherheitsventil auszuführenden Schließvorgangs eingestellt werden.

Nach einer zusätzlichen vorteilhaften Ausgestaltung der Erfindung ist der Antriebsmotor ein Getriebemotor. Dadurch kann die Anzahl von Getriebestufen, die die Drehzahl und/oder das Drehmoment des Antriebsmotors verändern sollen, verringert und somit die Baugröße des Stellantriebs reduziert werden.

Nach einer anderweitigen vorteilhaften Ausgestaltung der Erfindung sind die Schenkelfedern auf den verlängerten Achsen der Planetenräder angeordnet. Dadurch ist die Verbindung zwischen Schenkelfeder und Planetenrad auf kürzestem Wege und eine besonders kompakte Bauweise des Stellantriebs möglich.

Nach einer zusätzlichen vorteilhaften Ausgestaltung der Erfindung ist in dem die Zentralwelle des Planetengetriebes antreibenden Stirnrad ein axial aus der Planfläche hervorstehender Bolzen und im Gehäuse ein federnder Anschlag vorgesehen, an dem der Bolzen anschlägt. Dadurch wird die Drehbewegung der Zentralwelle und damit auch der Abtriebshohlwelle des Stellantriebs abgebremst und begrenzt.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel der Erfindung ist in den Zeichnungen dargestellt und im Folgenden näher beschrieben. In den Zeichnungen zeigen:
- Fig. 1: einen erfindungsgemäßen Stellantrieb im Schnitt,
- Fig. 2: einen Schnitt A - A durch den Stellantrieb aus Fig. 1,
- Fig. 3: die antriebsseitige Ansicht auf das Gehäuse einer zweiten Ausführung eines Stellantriebs,
- Fig. 4: einen Schnitt A - A durch den Stellantrieb aus Fig. 3 und
- Fig. 5: einen Schnitt B - B durch den Stellantrieb aus Fig. 3.

### Beschreibung des Ausführungsbeispiels

Der erfindungsgemäße Stellantrieb ist in einem Gehäuse untergebracht, das aus einem antriebsseitigen Gehäuseteil 1 und einen abtriebsseitigen Gehäuseteil 2 besteht. Er wird von einem Getriebemotor 3, auf dessen Abtriebszapfen ein Ritzel 4 drehfest angeordnet ist, angetrieben. Das Ritzel 4 kämmt mit einem Stirnrad 5, das auf einer zentralen Welle 6 des Stellantriebs angeordnet ist. Abtriebsseitig weist die Welle 6 ein Sonnenrad 7 auf, an dessen Umfang gleichmäßig verteilt Planetenräder 8 kämmen, die wiederum auf Federachsen 9 drehbar gelagert sind. Die Federachsen 9 stützen sich einerseits im antriebsseitigen Gehäuseteil 1 und auf der gegenüberliegenden Seite in einem Planetensteg 10 ab, der wiederum auf der Welle 6 abgefangen ist. Auf den Federachsen 9 sind Schenkelfedern 11 angeordnet, deren einer Schenkel im antriebsseitigen Gehäuseteil 1 und deren gegenüberliegender Schenkel in dem jeweiligen Planetenrad 8 jeweils dicht in Höhe des Außendurchmessers der Federachse 9 fest eingespannt ist, so dass die Schenkelfedern 11 mit dem jeweiligen Planetenrad 8 sowie dem antriebsseitigen Gehäuseteil 1 drehfest verbunden sind. Mit den Planetenrädern 8 kämmt ferner ein Hohlrad 12, an das ein Abtriebsrotor 13 mit einer Abtriebshohlwelle 14 angeflanscht ist. Das hier nicht dargestellte Ventil wird an einen am abtriebsseitigen Gehäuseteil 2 befestigten Flansch 15 angeschraubt, wobei die Antriebswelle des Ventils mit der Abtriebshohlwelle 14 des Stellantriebs drehfest verbunden wird.

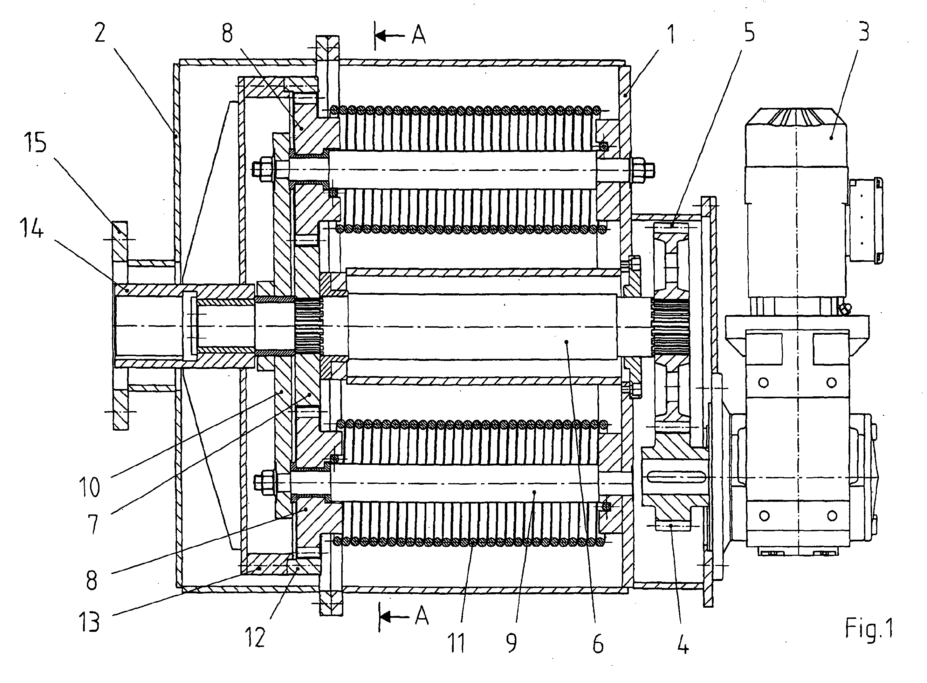

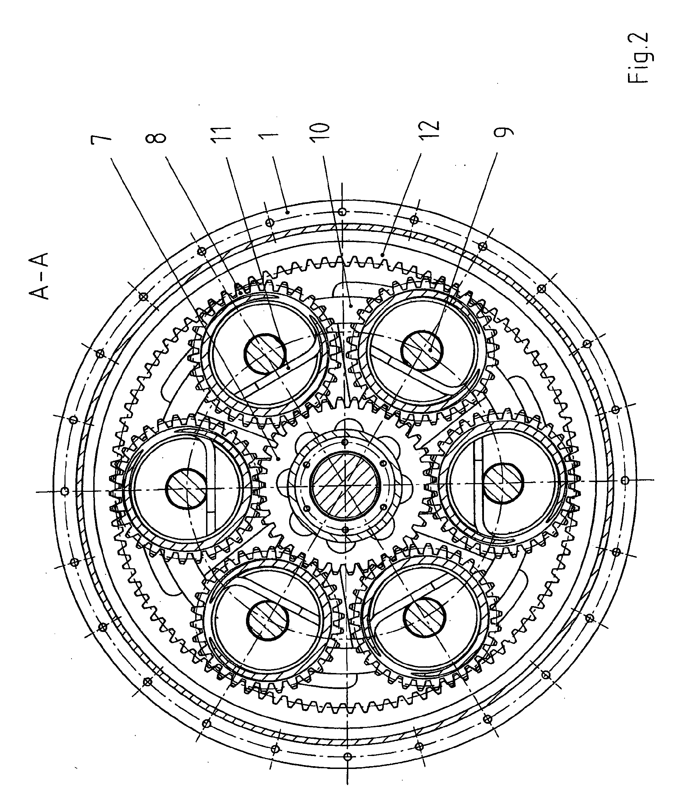

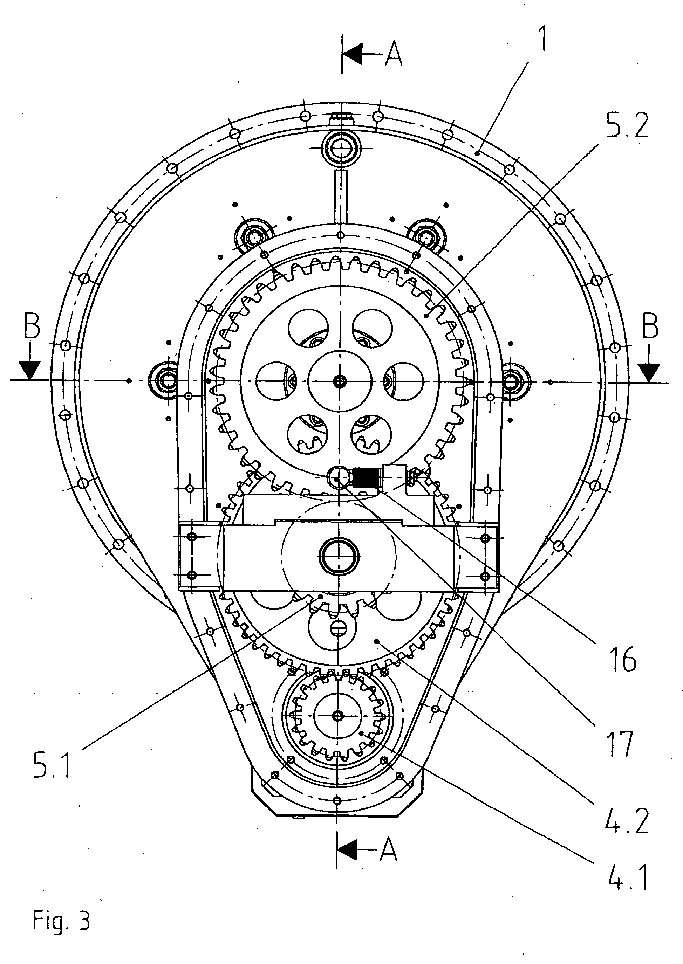

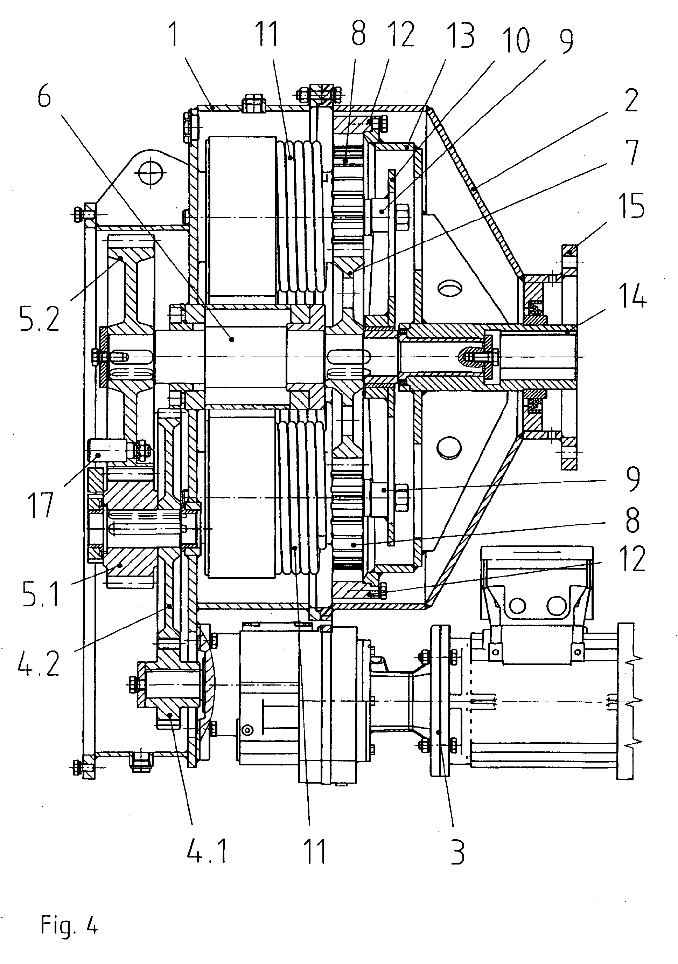

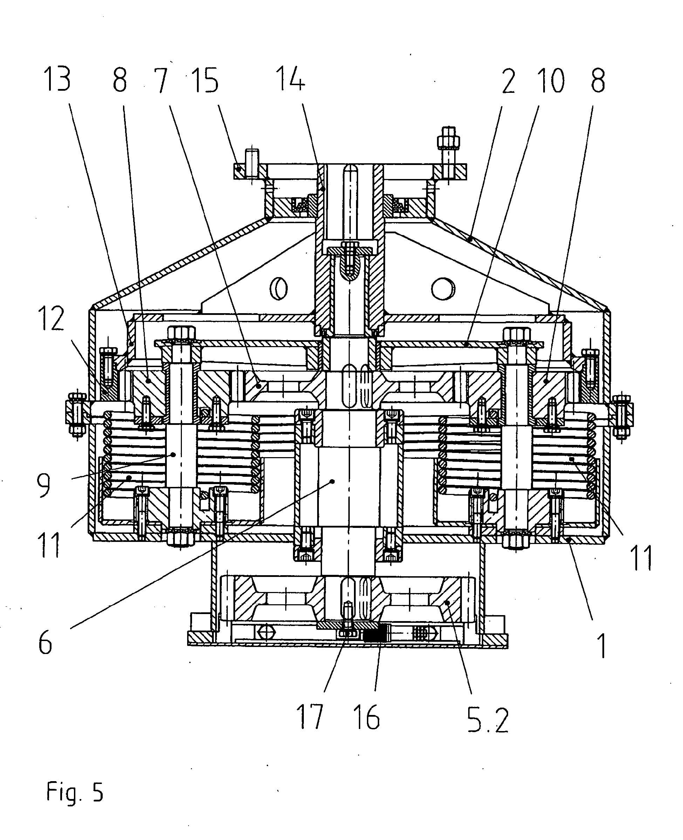

Fig. 3 zeigt die antriebsseitige Ansicht des Gehäuses einer zweiten Ausführungsform eines Stellantriebs, bei dem zwischen Getriebemotor 3 und Planetengetriebe zwei Getriebestufen (4.1, 4.2 und 5.1, 5.2) eingefügt sind. Teile, die in diesem Stellantrieb die gleiche Funktion ausführen wie in der in den Fig. 1 und 2 beschriebenen ersten Ausführungsform, wurden mit der gleichen Bezugszahl versehen. Die Fig. 4 und 5 zeigen Schnitte dieser Ausführungsform.

Auch bei dieser Ausführungsform ist der Stellantrieb in einem Gehäuse untergebracht, das aus dem antriebsseitigen Gehäuseteil 1 und dem abtriebsseitigen Gehäuseteil 2 besteht. Der Getriebemotor 3, der den Stellantrieb antreibt, ist bei dieser Ausführungsform unterhalb der Gehäuseteile 1, 2 angeordnet, so dass insgesamt eine kürzere Bauweise möglich ist. Auf dem Abtriebszapfen des Getriebemotors 3 ist ein Ritzel 4.1 angeordnet, das mit einem Stirnrad 4.2 kämmt, auf dessen Welle wiederum ein Ritzel 5.1 angeordnet ist, welches mit einem drehfest mit der Welle 6 des Stellantriebs verbundenen Stirnrad 5.2 kämmt. Die Ritzel 4.1 und 5.1 sowie die Stirnräder 4.2 und 5.2 bilden das Vorgelege (Fig. 4). Bei dieser Ausführung befindet sich die Abtriebsseite der Welle 6, auf der das Sonnenrad 7 sitzt, rechtsseitig. Wie auch bei der ersten Ausführung kämmen am Umfang des Sonnenrades 7 gleichmäßig verteilt sechs Planetenräder 8, die auf Federachsen 9 drehbar gelagert sind. Die Federachsen 9 stützen sich einerseits im antriebsseitigen Gehäuseteil 1 und auf der gegenüberliegenden Seite in dem Planetensteg 10 ab, der wiederum auf der Welle 6 abgefangen ist. Auf den Federachsen 9 sind Schenkelfedern 11 angeordnet, deren einer Schenkel im antriebsseitigen Gehäuseteil 1 und deren gegenüberliegender Schenkel in dem jeweiligen Planetenrad 8 jeweils dicht in Höhe des Außendurchmessers der Federachse 9 fest eingespannt ist, so dass die Schenkelfedern 11 mit dem jeweiligen Planetenrad 8 sowie dem antriebsseitigen Gehäuseteil 1 drehfest verbunden sind. Die Planetenräder 8 kämmen ferner in dem Hohlrad 12, an das der Abtriebsrotor 13 mit der Abtriebshohlwelle 14 angeflanscht ist. Das in den Fig. 3 bis 5 ebenfalls nicht dargestellte Ventil wird an den am abtriebsseitigen Gehäuseteil 2 befestigten Flansch 15 angeschraubt, wobei die Antriebswelle des Ventils mit der Abtriebshohlwelle 14 drehfest verbunden wird.

Aus den Fig. 3 und 5 ist ein federnder Anschlag 16 erkennbar, der in dem antriebsseitigen Gehäuseteil 1 befestigt ist und im vorliegenden Beispiel durch Tellerfedern gebildet wird. Aus der dem antriebsseitigen Gehäuseteil 1 zugewandten Planfläche des Stirnrades 5.2 ragt axial ein Bolzen 17 heraus, der an dem Anschlag 16 anschlägt. Dieser Bolzen ist so im Umfangsbereich des Stirnrades 5.2 positioniert, dass er kurz vor dem Absolvieren einer halben Umdrehung des Stirnrades 5.2 und damit auch lediglich einer halben Umdrehung der Welle 6 an dem Anschlag 16 anschlägt. Dadurch ist ein sicherer Abschluss des Schließvorgangs des Stellantriebs gewährleistet, d. h. ein Überdrehen der Schenkelfedern 11 in entgegengesetzter Richtung zur Spannrichtung wird vermieden.

Bei dieser Variante der Begrenzung des Schließvorganges des Ventils müssen demzufolge sämtliche in der Wirkkette der Übertragung des Stellmoments des Getriebemotors 3 befindlichen Getriebeteile 4.1, 4.2, 5.1, 5.2, 7, 8, 10, 12 so dimensioniert sein, dass bei einer halben Umdrehung der Welle 6 das Ventil sicher geschlossen ist.

Nachfolgend wird die Funktion des Stellantriebs beschrieben:
Beim Zusammenbau des Stellantriebs werden die Schenkelfedern 11 durch den Getriebemotor 3 vorgespannt, so dass von Anfang an das minimal erforderliche Stellmoment anliegt. Danach wird der Stellantrieb mit dem geschlossenen Sicherheitsventil verbunden. Zum Öffnen des Sicherheitsventils treibt der Getriebemotor 3 über die Getriebestufe 4, 5, (Fig. 1) bzw. die Vorgelegestufen 4.1, 4.2, 5.1, 5.2 (Fig. 4) das Sonnenrad 7, die Planetenräder 8 und das Hohlrad 12 den Abtriebsrotor 13 an. Dadurch werden gleichzeitig die Schenkelfedern 11 so lange gespannt, bis das Sicherheitsventil vollständig geöffnet ist. Die Getriebe- bzw. Vorgelegestufen 4, 5, 4.1, 4.2, 5.1, 5.2, die nachfolgenden Teile des Planetengetriebes 7, 8, 10, 12 sowie die Schenkelfedern 11 sind dabei so dimensioniert, dass die Schenkelfedern 11 in diesem Zustand ihr maximales Spannmoment erreichen. Wenn das Sicherheitsventil vollständig geöffnet ist, wird die Haltebremse des Motors durch ein elektrisches Signal aktiviert, und der Stellantrieb und damit auch das Sicherheitsventil werden so lange in dieser Stellung, die dem Betriebszustand bei maximalem Durchfluss entspricht, gehalten, so lange dieses elektrische Signal anliegt. Das Schließen des Sicherheitsventils unter normalen Betriebsbedingungen erfolgt durch einen Schaltvorgang, der die Haltebremse löst und den Getriebemotor 3 in Betrieb setzt, wobei sich die Schenkelfedern 11 gleichzeitig auf das minimale Stellmoment entspannen. Dagegen löst sich die Haltebremse im Havariefall, bei Not-Aus oder anderen Störungen, auf jeden Fall aber bei Stromausfall, automatisch, so dass sich die Schenkelfedern 11 infolge des fehlenden Widerstandes der Haltebremse selbst entspannen und dabei über die Planetenräder 8 und das Hohlrad 12 den Abtriebsrotor 13 in Bewegung setzen, der über seine Abtriebshohlwelle 14 das Sicherheitsventil sofort schließt.

Mit fortschreitender Entspannung der Schenkelfedern 11 sorgt die Massenträgheit der in der Wirkkette der Schenkelfedern 11 befindlichen Getriebebestandteile 4, 5, 4.1, 4.2, 5.1, 5.2, 7, 8, 10, 12, ähnlich dem Schwungradprinzip, für ein Nachlaufen derselben, wodurch ein vollständiges Schließen des Sicherheitsventils abgesichert wird.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Antriebsseitiges Gehäuseteil
- 2: Abtriebsseitiges Gehäuseteil
- 3: Getriebemotor
- 4: Ritzel
- 4.1: Ritzel
- 4.2: Stirnrad
- 5: Stirnrad
- 5.1: Ritzel
- 5.2: Stirnrad
- 6: Welle
- 7: Sonnenrad
- 8: Planetenrad
- 9: Federachse
- 10: Planetensteg
- 11: Schenkelfeder
- 12: Hohlrad
- 13: Abtriebsrotor
- 14: Abtriebshohlwelle
- 15: Flansch
- 16: Anschlag
- 17: Bolzen

## Patentansprüche

1. Stellantrieb für Sicherheitsventile mit hohem Stellmoment mit einem Gehäuse (1), einem Motor (3), einem Getriebe (7,8,12,13) und einem Energiespeicher, wobei der Stellantrieb über das Getriebe (7,8,12,13) von dem Motor (3) antreibbar ist, der beim Öffnen des Sicherheitsventils gleichzeitig den mit der Antriebswelle des Sicherheitsventils verbundenen und arretierbaren mechanischen Energiespeicher vorspannt, der nach Lösen der Arretierung die gespeicherte Energie wieder abgibt und dabei das Sicherheitsventil verschließt,
**dadurch gekennzeichnet,**
- **dass** der Abtrieb des Motors (3) mit einem Planetengetriebe (7, 8, 12, 13) verbunden ist, dessen Abtriebsrotor (13) mit der Antriebswelle des Sicherheitsventils verbunden ist und
- **dass** der mechanische Energiespeicher aus einer der Anzahl der Planetenräder (8) entsprechenden Anzahl von Schenkelfedern (11) besteht, die einerseits jeweils mit einem der Planetenräder (8) und auf der gegenüberliegenden Seite mit dem Gehäuse (1) des Stellantriebs drehfest verbunden sind.

2. Stellantrieb nach Anspruch 1,
**dadurch gekennzeichnet,**
**dass** der Abtrieb des Motors (3) über mindestens eine Getriebestufe (4, 5, 4.1, 4.2, 5.1, 5.2) mit dem Planetengetriebe (7, 8, 12, 13) verbunden ist

3. Stellantrieb nach Anspruch 1 oder 2,
**dadurch gekennzeichnet,**
**dass** der Motor ein Getriebemotor (3) ist.

4. Stellantrieb nach Anspruch 1, 2 oder 3,
**dadurch gekennzeichnet,**
**dass** die Schenkelfedern (11) auf verlängerten Achsen (9) der Planetenräder (8) angeordnet sind.

5. Stellantrieb nach einem der Ansprüche 1 bis 4,
**dadurch gekennzeichnet,**
**dass** an einem fixen Teil des Stellantriebs ein Anschlag (16) und an einem beim Schließvorgang des Sicherheitsventils nicht mehr als eine Umdrehung ausführenden Teil des Getriebes (5.2) ein Bolzen (17) angeordnet ist, der zur Beendigung des Schließvorgangs an dem Anschlag (16) anschlägt.

## Claims

1. Actuating drive for safety valves having a high actuating torque with a housing (1), a motor (3), a gear train (7, 8, 12, 13) and an energy storage device whereby the actuating drive can be driven by means of the gear train (7, 8, 12, 13) by the motor (3), which motor, at the same time as the safety valve is opened, preloads the mechanical energy storage device, which is connected to the drive shaft of the safety valve and can be locked, and which, after release of the lock, outputs the stored energy again and thereby closes the safety valve, **characterised in**
- **that** the drive of the motor (3) is connected to a planetary gear train (7, 8, 12, 13), the output rotor (13) of which is connected to the safety valve and
- **that** the mechanical energy storage device consists of a number of leg springs (11) that corresponds to the number of planetary gears (8), which springs are each connected on one side to one of the planetary gears (8) and on the opposite side to the housing (1) of the actuating drive in a torque-proof manner.

2. Actuating drive in accordance with Claim 1,
**characterised in**
**that** the output of the motor (3) is connected to the planetary gear mechanism (7, 8, 12, 13) by means of at least one gear stage (4, 5, 4.1, 4.2, 5.1, 5.2)

3. Actuating drive in accordance with Claim 1 or 2,
**characterised in**
**that** the motor is a gear motor (3).

4. Actuating drive in accordance with Claim 1, 2 or 3,
**characterised in**
**that** the leg springs (11) are disposed on extended axles (9) of the planetary gears (8).

5. Actuating drive in accordance with one of Claims 1 to 4,
**characterised in**
**that** a stop (16) is disposed on a fixed part of the actuating drive and a pin (17) is disposed on a part of the gear mechanism (5.2) that performs not more than one revolution during the closing process of the safety valve, which pin makes contact with the stop (16) to terminate the closing process.

## Revendications

1. Servomoteur pour soupapes de sécurité avec couple de réglage élevé, avec un carter (1), un moteur (3), un engrenage (7, 8, 12, 13) et un accumulateur d'énergie, le sevomoteur pouvant être commandé au moyen de l'engrenage (7, 8, 12, 13) par le moteur (3) qui précontraint simultanément, lors de l'ouverture de la soupape de sécurité, l'accumulateur d'énergie mécanique blocable et relié à l'arbre de commande de la soupape de sécurité, émettant l'énergie stockée tout en obturant la soupape de sécurité après desserrage du blocage,
**caractérisé par le fait**
- **que** la sortie du moteur (3) est reliée à un engrenage planétaire (7, 8, 12, 13), dont le rotor mené (13) est relié à l'arbre de transmission de la soupape de sécurité et
- **que** l'accumulateur d'énergie mécanique se compose d'un nombre de ressorts à branches (11) correspondant au nombre de roues planétaires (8), qui sont reliés solidairement en rotation, d'un côté, à l'une des roues planétaires (8) et, de l'autre côté, au carter (1) du servomoteur.

2. Servomoteur conformément à la revendication n°1,
**caractérisé par le fait**
**que** la sortie du moteur (3) est reliée à l'engrenage planétaire (7, 8, 12, 13) par au moins un étage d'engrenage (4, 5, 4.1, 4.2, 5.1, 5.2)

3. Servomoteur conformément à la revendication n°1 ou n°2,
**caractérisé par le fait**
**que** le moteur est un moto-réducteur (3).

4. Servomoteur conformément à la revendication n°1, n°2 ou n°3,
**caractérisé par le fait**
**que** les ressorts à branches (11) sont disposés sur des axes allongés (9) des roues planétaires (8).

5. Servomoteur conformément à l'une des revendications n°1 à n°4,
**caractérisé par le fait**
**qu'**une butée (16) est disposée sur une partie fixe du servomoteur et qu'un boulon (17) butant sur la butée (16) pour achever le processus de fermeture est disposé sur une partie de l'engrenage (5.2) n'exécutant pas plus d'une rotation lors du processus de fermeture de la soupape de sécurité.
